# FASCICULE DE BREVET EUROPEEN

(11) **EP 4 619 262 B1**
(45) Date de publication et mention de la délivrance du brevet: **01.07.2026**
(21) Numéro de dépôt: 23810425.1
(22) Date de dépôt: 18.10.2023
(51) Int. Cl.: B60K 6/387, B60K 6/442, B60W 20/40, B60W 10/06, B60W 10/08

(54) **PROCEDE DE PREDICTION D'UN DEMARRAGE MOTEUR PAR DETECTION D'UNE COMMANDE DE RETROGRADAGE**
VERFAHREN ZUR VORHERSAGE EINES MOTORSTARTS DURCH ERKENNUNG EINES HERUNTERSCHALTBEFEHLS
METHOD FOR PREDICTING AN ENGINE START BY DETECTING A DOWNSHIFT COMMAND

(30) Priorité: 15.11.2022 FR 2211856
(43) Date de publication de la demande: 24.09.2025
(73) Titulaire: Stellantis Auto SAS, 78300 Poissy (FR)
(72) Inventeur: GAUDICHON, Ludovic, 78117 TOUSSUS LE NOBLE (FR); DUMAY, Anthony, 78260 ACHERES (FR); CHEMISKY, Jean Pierre, 92150 SURESNES (FR)
(74) Mandataire: PSIP
(86) Numéro de dépôt international: PCT/FR2023/051627
(87) Numéro de publication internationale: WO 2024/105320

(56) Documents cités:
- EP-A1- 2 930 076
- EP-A1- 3 318 747
- EP-A1- 3 711 994
- DE-A1- 102016 108 520

## Description

Le domaine de l'invention concerne un procédé de commande d'un groupe motopropulseur hybride permettant un démarrage anticipé du moteur thermique.

L'hybridation des groupes motopropulseurs existe à différents niveaux se différenciant notamment sur la puissance électrique et si le véhicule est doté d'une interface de recharge électrique. Les véhicules hybrides électrifiés sont équipés généralement d'un moteur à combustion interne et d'une machine électrique motrice qui sont tous deux prévus pour transmettre un couple moteur aux roues motrices de manière simultanée ou non selon la stratégie de répartition de couple et la puissance disponible. La transition d'un mode de motorisation électrique (EV), où uniquement la machine électrique transmet un couple moteur aux roues motrices, vers un mode de motorisation dans lequel intervient le moteur à combustion interne (HEV) est une phase où le temps de réponse doit être le plus faible possible pour que cette transition soit transparente pour le conducteur.

Les lois de commande du superviseur hybride déterminant le démarrage du moteur à combustion interne sont généralement prévues pour optimiser le critère de consommation électrique. Lorsque le véhicule est en conditions optimales pour un roulage électrique, c'est-à-dire avec un état de charge de la batterie élevé et en roulage à faible vitesse par exemple, ces stratégies multicritères font qu'il existe une latence perceptible par le conducteur lors de la transition du mode électrique vers le mode en roulage thermique. Cette latence, le temps entre l'instant de l'intention du conducteur et l'instant de prise de décision par le superviseur, résulte du fait que la commande de démarrage se base sur le couple demandé par rapport à un seuil potentiellement élevé selon la stratégie énergétique. On a établi qu'au-delà d'une latence de 750ms, un conducteur perçoit un manque de réactivité. On a observé cette situation pour les dépassements à faible vitesse en roulage électrique. On souhaite éviter ces situations.

On connait de l'état de la technique le document brevet JP5076516B2 concernant un groupe motopropulseur hybride qui décrit que, lorsque le couple moteur/générateur est insuffisant et que la demande de rétrogradage de la transmission se produisent simultanément, le superviseur commande le démarrage du moteur thermique afin de satisfaire le conducteur dans le ressenti de demande d'accélération. Ce document vise à augmenter la capacité d'accélération lorsque le couple moteur demandé est important. Dans ces stratégies classiques, le démarrage est décidé en fonction de la valeur du couple moteur par rapport à un seuil de démarrage. Cette solution reste affectée par le problème de latence en situation de basse vitesse et lorsque la batterie est chargée à un niveau important.

On connait en outre le document brevet JP-A1-2009143501 qui décrit une stratégie de commande d'une transition EV vers un mode HEV consistant à exécuter un démarrage thermique lors d'un passage descendant demandé via la palette de rétrogradage par le conducteur pour une boite de vitesse automatique. Ce document décrit des stratégies de priorisation du démarrage et du changement de rapport par rapport à un seuil de priorisation en couple lors d'une transition du mode EV au mode HEV afin d'améliorer la réactivité du véhicule. Ce seuil de priorisation permet de discriminer une accélération élevée d'une accélération moyenne ou faible pour privilégier le potentiel d'accélération. Par conséquent, que l'enfoncement de pédale soit supérieur ou inférieur au seuil, le démarrage est demandé et seul l'ordre de la séquence est modifié. On a néanmoins le même problème de latence dans les stratégies de démarrage se basant sur le couple moteur.

L'état de la technique est également connu du document brevet EP 3 318 747 A1.

Il existe donc un besoin de pallier les problèmes précités. Un objectif de l'invention est de réduire le temps de latence lors d'une transition entre un mode EV et un mode HEV, en particulier lorsque le seuil de décision de démarrage est dépendant d'un enfoncement pédale et de l'état de charge de la batterie. Un objectif de l'invention est de permettre un potentiel d'accélération important et sans latence dans le cas de situation de dépassement à basse vitesse.

L'invention propose un procédé de commande d'un véhicule électrifié hybride comportant une machine électrique motrice et un moteur à combustion interne, dans lequel l'état de démarrage du moteur à combustion interne est dépendant de l'état de signaux de requête de démarrage, dans lequel un module de prédiction d'une manœuvre d'accélération pilote l'état d'un premier signal de requête de démarrage par la mise en œuvre des étapes successives suivantes :
- la détermination d'un premier paramètre représentatif de l'enfoncement d'une pédale d'accélérateur et d'un deuxième paramètre représentatif de l'accélération du véhicule,
- la comparaison du premier paramètre d'enfoncement par rapport à un premier seuil d'enfoncement compris entre 3% et 10% de la course d'enfoncement de la pédale et la comparaison du deuxième paramètre d'accélération par rapport à un deuxième seuil compris entre 0,1m/s² et 0,3m/s²,
- en cas de détection d'une requête de rétrogradage manuelle, alors le premier signal de requête de démarrage du module de prédiction est activé uniquement si, simultanément à l'instant de la détection, le premier paramètre et le deuxième paramètre sont supérieurs au premier seuil et au deuxième seuil respectivement.

Le procédé selon l'invention peut comporter les caractéristiques additionnelles suivantes, seules ou en combinaison :
- un module de démarrage principal pilote l'état d'un deuxième signal de requête de démarrage qui est fonction du couple moteur demandé par rapport à un seuil de couple, dans lequel le seuil de couple correspond à une position d'enfoncement de la pédale d'accélérateur et est dépendant en outre au moins de l'état de charge d'une batterie de traction du véhicule, et dans lequel le premier seuil d'enfoncement est inférieur à ladite position d'enfoncement du seuil de couple ;
- la requête de rétrogradage est générée à partir d'un signal d'une palette de commande du volant du véhicule ;
- le premier seuil est égal à 3% et le deuxième seuil est égal à 0,1m/s² ;
- la détermination consiste à calculer la valeur moyenne du premier et du deuxième paramètre durant une durée périodique de calcul et en ce que la détection de la requête de rétrogradage s'exécute à l'instant de fin de chaque période de calcul ;
- la durée périodique a une durée de 0,5 secondes ;

L'invention prévoit en outre un programme-ordinateur comprenant des instructions qui, lorsque le programme est exécuté par une unité de commande d'un véhicule électrifié hybride, conduisent celui-ci à mettre en œuvre le procédé de commande selon l'invention.

On envisage un véhicule électrifié hybride comportant un moteur à combustion interne, une machine électrique motrice, une boite de vitesses automatisée apte à être commandée par le conducteur manuellement par une interface de commande de changement de rapport et une unité de commande configurée pour commander l'état de démarrage du moteur à combustion interne en fonction de l'état de signaux de requête de démarrage, dans lequel l'unité de commande comporte un module de prédiction d'une manœuvre d'accélération configuré pour mettre en œuvre le procédé de commande selon l'invention pour le pilotage d'un signal de requête de démarrage. De préférence, l'interface de commande de changement de rapport est une palette de commande du volant du véhicule.

L'invention présente l'avantage d'être une solution logicielle implémentable dans le superviseur du véhicule automobile hybride pour un coût très faible, par programmation d'une fonction de prédiction spécifique reposant sur l'observation de signaux disponibles. En outre, cette solution permet de dimensionner au minimum les organes de démarrage et la batterie de traction du fait du gain réalisé par la fonction de prédiction en temps de réponse de disponibilité du couple moteur au regard de critères d'agrément voulus.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente schématiquement un véhicule électrifié hybride configuré pour mettre en œuvre le procédé de commande selon l'invention.
[Fig.2] représente le module de prédiction d'une commande d'accélération par détection d'une requête de rétrogradage manuelle.

L'invention s'applique aux véhicules électrifiés hybrides comprenant un moteur à combustion interne, une machine électrique motrice et de l'électronique de puissance, et un procédé de commande du démarrage du moteur permettant de diminuer le délai de disponibilité du couple moteur dans une situation où le conducteur commande un rétrogradage.

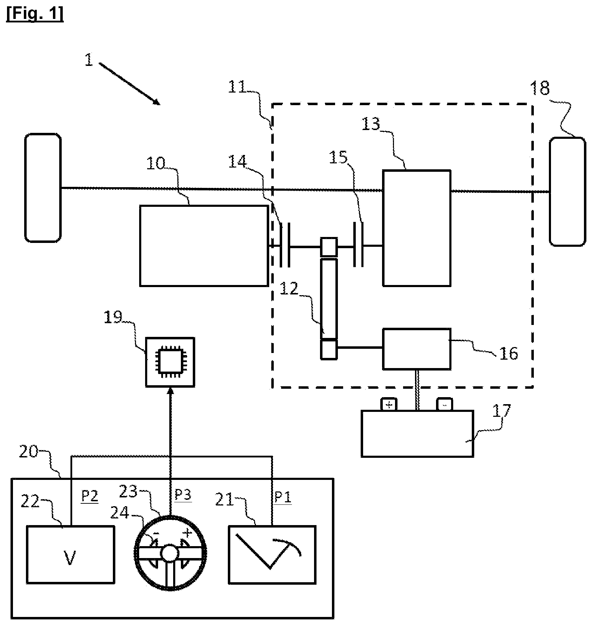

En référence à la figure 1, on a représenté schématiquement un groupe motopropulseur hybride d'un véhicule électrifié selon l'invention. Le véhicule 1 comporte une machine électrique motrice 16 qui est apte à délivrer un couple moteur aux roues motrices 18 et un système de stockage d'énergie 17 prévu pour fournir l'énergie électrique aux besoins de la traction électrique. Le véhicule peut comporter une unique, deux machines électriques motrices ou plus. Par exemple, une machine électrique peut être disposée sur le train de roue avant et une autre sur le train de roue arrière.

Le système de stockage d'énergie 17 est une batterie comprenant des cellules électrochimiques, par exemple de type Lithium-ion, Ni-mh, Lithium-Fer-Phosphate, ou plomb. La tension nominale du système de stockage d'énergie peut être de 24 volts, 48 volts ou de plusieurs centaines de Volts selon la puissance d'hybridation. Le véhicule peut comporter en outre une interface de recharge de la batterie (non représentée) à partir d'un réseau d'alimentation externe, mais ce n'est pas obligatoire. Le système de stockage 17 comporte un calculateur apte à informer d'autres calculateurs de paramètres de fonctionnement de la batterie, notamment l'état de charge.

Dans cet exemple non limitatif, la machine électrique 16 est intégrée à un module de boite de vitesses 11 comprenant une boite de vitesse automatisée 13. La machine électrique 16 est attelée à son arbre primaire. La machine électrique 16 peut fonctionner à une tension nominale de 24 Volts, 48 Volts, ou de plusieurs centaines de Volts (par exemple 300 Volts environ) selon la puissance d'hybridation. Le module de boite de vitesses 11 comporte des moyens d'accouplement 14 et 15 d'arbres tournants, en particulier pour accoupler sélectivement et automatiquement l'arbre primaire à un moteur à combustion interne 10 et à la machine électrique motrice 16 selon des lois de commande du véhicule 1. Un élément de transmission mécanique 12 est prévu pour relier mécaniquement en rotation le rotor de la machine électrique 16 à l'arbre de transmission de couple moteur relié au roues motrices. Les moyens d'accouplement 14, 15 sont par exemple des embrayages multi-disques permettant de piloter le couple de transmission.

L'état de transmission de couple des moyens d'accouplement 14 et 15 est piloté automatiquement en fonction d'une configuration en mode de roulage électrique (EV) dans lequel la machine électrique motrice uniquement transmet un couple moteur aux roues motrices 18 ou d'une configuration en mode de roulage hybride (HEV) dans lequel le moteur à combustion interne 10 transmet un couple moteur aux roues motrices seul ou associé à la machine électrique 16. Les moyens d'accouplement 14 et 15 sont pilotés automatiquement lors de la phase de transition du mode EV vers le mode HEV.

Le passage des rapports de vitesse se réalise automatiquement en fonction de lois de commande enregistrées en mémoire d'un calculateur de la boite de vitesses, lesquelles prennent en compte notamment le couple total disponible si le moteur à combustion interne est démarré ou non. Le dispositif de levier de vitesse associé à la boite de vitesse peut présenter un mode automatique (« D ») ou un mode manuel (« M »). Le véhicule comporte un levier de vitesse et des moyens 23 et 24 de requête de changement de vitesse au volant, par exemple une interface à palettes de commande positionnée derrière le volant. Alternativement, l'interface peut comprendre des boutons.

Par ailleurs, même lorsque la configuration de roulage est activée en mode automatique (position « D »), une fonction du véhicule permet néanmoins d'activer manuellement un rétrogradage au moyen de la palette de commande de rétrogradage. Elle est prévue pour permettre au conducteur d'activer facilement un freinage moteur par rétrogradage.

Le véhicule comporte un organe de démarrage (non représenté en figure 1) du moteur à combustion interne 10, de type alterno-démarreur à courroie ou de type démarreur intégré. Cet organe de démarrage intervient lorsqu'une requête de démarrage est activée pour la mise en entrainement du moteur, notamment à vitesse nulle ou faible.

Le moteur à combustion interne 10 est piloté de manière que son démarrage (mise en entrainement et injection carburant) et son accostage sont pilotés automatiquement par une unité de commande 19 du véhicule 1. La décision de son démarrage repose sur des choix énergétiques configurés dans l'unité de commande 19 dépendant de multiples critères, pouvant être par exemple un mode de conduite sélectionné (économe, sportif, par exemple), le couple demandé, la vitesse du véhicule, le rapport de vitesse engagé, l'état de fonctionnement de la climatisation, d'un état d'ouverture des portes, ainsi que le niveau d'état de charge de la batterie 17.

Plus précisément, l'unité de commande 19 est un calculateur à circuits intégrés assurant le rôle de superviseur du véhicule et mettant en œuvre des fonctions de pilotage de coordination de la machine électrique 16 et du moteur à combustion interne 10. L'unité de commande 19 reçoit continuellement des paramètres de signaux électriques issus de capteurs 20 ou autres calculateurs. L'unité de commande 19 comporte des fonctions déterminant l'état de requêtes de démarrage du moteur à combustion interne 10. Par exemple, la fonction principale de démarrage détermine l'état d'une requête de démarrage en fonction d'une consigne de volonté en couple du conducteur par rapport à un seuil en couple. Ce seuil peut être variable en fonction de l'état de charge de la batterie. Il aura tendance à être plus élevée pour un état de charge complet par rapport à un état de charge faible. Autrement, une fonction de démarrage pour les besoins de la climatisation active une requête de démarrage lorsqu'on détecte une demande de climatisation. Ou bien encore, une autre fonction de sécurité active une requête de démarrage lorsque les portes du véhicule sont ouvertes, ceci pour contrôler que le véhicule est éteint et non en mode EV actif au moment où le conducteur quitte le véhicule. On comprendra donc que l'unité de commande 19 héberge plusieurs fonctions de pilotage d'une requête de démarrage pour un besoin qui n'est pas toujours lié à une demande en couple aux roues motrices.

Pour l'invention, l'unité de commande 19 met en œuvre une fonction de prédiction d'une manœuvre d'accélération permettant de réduire la latence entre un instant d'une intention d'accélérer et la disponibilité du couple moteur délivré par le moteur à combustion interne 10. La fonction de prédiction analyse des paramètres du véhicule périodiquement sur une durée prédéterminée en roulage et estime s'il existe une intention du conducteur d'accélérer avant que celui-ci enfonce fortement la pédale d'accélérateur, c'est-à-dire avant le franchissement de la position pédale correspondant au seuil de démarrage principal défini en couple. La fonction de prédiction répond principalement à une situation en mode de roulage EV à basse vitesse et durant laquelle les conditions de fonctionnement du véhicule privilégient le roulage électrique et sont susceptibles de retarder un démarrage, c'est-à-dire un état de charge de la batterie élevé et une vitesse faible du véhicule, notamment.

Pour la mise en œuvre du procédé de commande selon l'invention, l'unité de commande 19 prend en compte un paramètre P1 représentatif de la position d'enfoncement de la pédale d'accélérateur à partir d'un capteur 21 de position de pédale, exprimé par exemple en % de la course d'enfoncement, où 0% est la position de relâchement et 100% est la position d'enfoncement complet. L'unité de commande 19 reçoit un deuxième paramètre P2 représentatif de la vitesse ou de l'accélération du véhicule, par exemple à partir d'un capteur de roue 22 ou d'un capteur de régime de l'arbre primaire. En outre, l'unité de commande 19 reçoit un troisième paramètre P3 représentatif de l'état d'actionnement d'une commande manuelle de passage descendant de rapport de vitesses, par exemple à partir d'un capteur de palette 24 « - » du volant 23, ou d'un capteur de levier de vitesse. Dans un mode de réalisation préférentiel, seulement une commande de rétrogradage déclenchée par la palette volant est prise en compte. Seule la palette permet de sortir automatiquement du mode automatique pour un rétrogradage manuel.

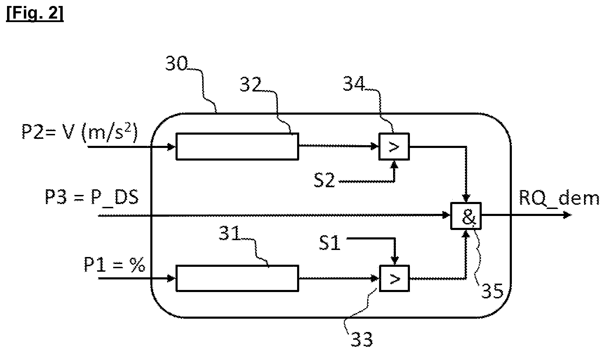

En figure 2, on a représenté un bloc fonctionnel illustrant la mise en œuvre du procédé de commande selon l'invention permettant d'anticiper une demande importante de couple moteur par analyse prédictive de ces paramètres. Le bloc 30 représente la fonction de prédiction mise en œuvre par l'unité de commande du véhicule. L'unité de commande est munie d'un calculateur à circuits intégrés et de mémoires électroniques, le calculateur et les mémoires étant configurés pour exécuter le procédé de commande. Mais cela n'est pas obligatoire. En effet, le calculateur pourrait être externe à l'unité de commande 19, tout en étant couplé à cette dernière 19. Dans ce dernier cas, il peut être lui-même agencé sous la forme d'un calculateur dédié comprenant un éventuel programme dédié, par exemple. Par conséquent, l'unité de commande, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

La fonction 30 comprend des moyens d'acquisition et de détermination des paramètres P1, P2 et P3. Le paramètre P1 de position d'enfoncement de la pédale d'accélérateur prend des valeurs comprises entre 0% et 100% de la course de la pédale et permet de déterminer si le conducteur a le pied posé sur la pédale. En outre, le paramètre P2 est représentatif de la vitesse du véhicule et permet de déterminer si le véhicule est en phase de début d'accélération ou de vitesse stable. Le paramètre P3 est représentatif de l'actionnement d'une requête de rétrogradage manuelle par le conducteur, de préférence par la palette volant.

Le procédé comporte des étapes de détermination 31 et 32 durant une période de calcul, ou une fenêtre de temps de durée prédéterminé, par exemple d'une durée de 0,5 secondes, de la valeur moyenne de la position de la pédale d'accélérateur et la valeur moyenne de l'accélération. Ces valeurs moyennes sont calculées périodiquement selon la période de calcul prédéterminée.

Le procédé de commande comporte des étapes de comparaison 33 et 34 des paramètres P1 et P2 par rapport à deux seuils S1 et S2 enregistrés en mémoire de l'unité de commande.

S1 est compris entre 3% et 10% de la course d'enfoncement, de préférence S1 est égale à 3%. Cette valeur est avantageusement choisie à un niveau d'enfoncement qui est inférieur à la position d'enfoncement qui correspond au seuil de couple de la fonction principale de démarrage se basant sur le couple moteur. Ainsi, le module de prédiction permet de détecter si le conducteur a le pied posé sur l'accélérateur et permet d'anticiper un éventuel enfoncement proche, notamment pour un dépassement. Cela permet de réduire le temps de latence, notamment lorsque la batterie est en charge élevée.

S2 est compris entre 0.1m/s² et 0.3m/s², de préférence est égal à 0,3m/s². Cette valeur est choisie de façon à détecter un début accélération et pour discriminer une phase de décélération.

A l'instant de fin de chaque fenêtre de calcul, l'unité de commande compare à l'étape 33 le paramètre P1 d'enfoncement avec le seuil S1 et compare à l'étape 34 le paramètre d'accélération avec le seuil S2. Si on détecte que P1 est supérieur à S1 et P2 est supérieur à S2, cela indique qu'il est probable que le conducteur souhaite accélérer. Si l'un des deux paramètres est inférieur au seuil respectif, la requête de démarrage RQ_dem ne sera pas activée. On estime que les conditions ne correspondant par une phase présageant une accélération. Un rétrogradage est commandé et une phase de freinage moteur est opérée, éventuellement en freinage récupératif.

Ensuite, l'activation de la requête de démarrage RQ_dem est conditionnée à la vérification du paramètre P3 représentatif d'un actionnement du rétrogradage manuel P_DS. L'unité de commande vérifie à une étape 35 si le conducteur a activé la requête de rétrogradage P_DS à l'instant de fin chaque fenêtre de calcul 31 et 32.

Si, oui, la fonction de prédiction 30 analyse cette situation comme étant une volonté d'accélération proche et active la requête de démarrage RQ_dem. Le signal électrique correspondant est piloté à l'état haut par exemple pour un signal booléen, ou à un code numérique représentatif d'une demande de démarrage. Grâce à l'invention, on active le démarrage avant le franchissement du seuil de démarrage correspondant au seuil de couple de démarrage de la fonction principale. On réduit donc le temps de disponibilité du couple moteur. Le conducteur n'aura donc plus à subir le temps de transition EV/HEV lors de sa manœuvre de dépassement par exemple. Le démarrage s'effectue classiquement tout d'abord par une phase d'entrainement, éventuellement par un organe de démarrage, de type démarreur intégré ou alterno-démarreur à courroie par exemple, jusqu'à atteindre un régime suffisant pour l'accostage et la mise en accouplement du moteur à l'arbre primaire.

Si l'unité de commande ne détecte pas de requête de rétrogradage manuel, la fonction de prédiction 30 pilote le signal RQ_dem à l'état d'inactivation, par exemple état bas ou un code numérique représentatif de l'absence de demande de démarrage.

L'invention s'applique aux véhicules hybrides électrifiés de type MHEV (« Mild Hybrid» ) et PHEV (Plug-in Hybrid »). L'invention est décrite dans ce qui précède à titre d'exemple. Il est entendu que la personne de l'art est à même de réaliser différentes variantes de réalisation de l'invention en associant par exemple les différentes caractéristiques ci-dessus prises seules ou en combinaison, sans pour autant sortir du cadre de l'invention.

## Revendications

1. Procédé de commande d'un véhicule électrifié hybride (1) comportant une machine électrique motrice (16) et un moteur à combustion interne (10), dans lequel l'état de démarrage du moteur à combustion interne (10) est dépendant de l'état de signaux de requête de démarrage, **caractérisé en ce qu'**un module de prédiction (30) d'une manœuvre d'accélération pilote l'état d'un premier signal de requête de démarrage (RQ_dem) par la mise en œuvre des étapes successives suivantes :
- la détermination (31, 32) d'un premier paramètre (P1) représentatif de l'enfoncement d'une pédale d'accélérateur et d'un deuxième paramètre (P2) représentatif de l'accélération du véhicule,
- la comparaison (33) du premier paramètre d'enfoncement (P1) par rapport à un premier seuil d'enfoncement (S1) compris entre 3% et 10% de la course d'enfoncement de la pédale et la comparaison (34) du deuxième paramètre d'accélération (P2) par rapport à un deuxième seuil (S2) compris entre 0,1m/s² et 0,3m/s²,
- en cas de détection d'une requête de rétrogradage manuelle (P_DS), alors le premier signal de requête de démarrage (RQ_dem) du module de prédiction (30) est activé uniquement si, simultanément à l'instant de la détection, le premier paramètre (P1) et le deuxième paramètre (P2) sont supérieurs au premier seuil (S1) et au deuxième seuil (S2) respectivement.

2. Procédé de commande selon la revendication 1, dans lequel un module de démarrage principal pilote l'état d'un deuxième signal de requête de démarrage qui est fonction du couple moteur demandé par rapport à un seuil de couple, dans lequel le seuil de couple correspond à une position d'enfoncement de la pédale d'accélérateur et est dépendant en outre au moins de l'état de charge d'une batterie de traction du véhicule, et dans lequel le premier seuil d'enfoncement est inférieur à ladite position d'enfoncement du seuil de couple.

3. Procédé de commande selon la revendication 1 ou 2, dans lequel la requête de rétrogradage (P_DS) est générée à partir d'un signal d'une palette de commande (24) du volant (23) du véhicule.

4. Procédé de commande selon l'une quelconque des revendications 1 à 3, dans lequel le premier seuil (S1) est égal à 3% et le deuxième seuil (S2) est égal à 0,1m/s².

5. Procédé de commande selon l'une quelconque des revendications 1 à 4, dans lequel la détermination (31, 32) consiste à calculer la valeur moyenne du premier et du deuxième paramètres (P1, P2) durant une durée périodique de calcul et en ce que la détection de la requête de rétrogradage (P_DS) s'exécute à l'instant de fin de chaque période de calcul.

6. Procédé de commande selon la revendication 5, dans lequel la durée périodique a une durée de 0,5 secondes.

7. Programme-ordinateur comprenant des instructions qui, lorsque le programme est exécuté par une unité de commande (19) d'un véhicule électrifié hybride (1), conduisent celui-ci à mettre en œuvre le procédé de commande selon l'une quelconque des revendications 1 à 6.

8. Véhicule électrifié hybride (1) comportant un moteur à combustion interne (10), une machine électrique motrice (16), une boite de vitesses automatisée (11) apte à être commandée par le conducteur manuellement par une interface de commande de changement de rapport (24) et une unité de commande (19) configurée pour commander l'état de démarrage du moteur à combustion interne (10) en fonction de l'état de signaux de requête de démarrage, **caractérisée en ce que** l'unité de commande (19) comporte un module de prédiction (30) d'une manœuvre d'accélération configuré pour mettre en œuvre le procédé de commande selon l'une quelconque des revendications 1 à 6 pour le pilotage d'un signal de requête de démarrage (RQ_dem).

9. Véhicule électrifié hybride (1) selon la revendication 8 dans lequel l'interface de commande de changement de rapport (24) est une palette de commande du volant (23) du véhicule.

## Patentansprüche

1. Verfahren zur Steuerung eines elektrisch angetriebenen Hybridfahrzeugs (1) mit einer elektrischen Antriebsmaschine (16) und einer Brennkraftmaschine (10), wobei der Startzustand der Brennkraftmaschine (10) von dem Zustand von Startanforderungssignalen abhängt, **dadurch gekennzeichnet, dass** ein Vorhersagemodul (30) eines Beschleunigungsmanövers den Zustand eines ersten Startanforderungssignals (RQ_DEM) durch die Durchführung der folgenden aufeinander folgenden Schritte steuert:
- Bestimmung (31, 32) eines ersten Parameters (P1), der für die Betätigung des Gaspedals repräsentativ ist, und eines zweiten Parameters (P2), der für die Beschleunigung des Fahrzeugs repräsentativ ist,
- Vergleich (33) des ersten Eindrückparameters (P1) mit einem ersten Eindrückschwellenwert (S1) zwischen 3% und 10% des Pedaleindrückhubs und Vergleich (34) des zweiten Beschleunigungsparameters (P2) mit einem zweiten Schwellenwert (S2) zwischen 0,1 m/s² und 0,3 m/s²,
- Bei Erkennung einer manuellen Herabstufungsanforderung (P_DS) wird das erste Startanforderungssignal (RQ_dem) des Vorhersagemoduls (30) nur dann aktiviert, wenn gleichzeitig zum Zeitpunkt der Erkennung der erste Parameter (P1) und der zweite Parameter (P2) über dem ersten Schwellenwert (S1) bzw. dem zweiten Schwellenwert (S2) liegen.

2. Steuerverfahren nach Anspruch 1, wobei ein Hauptstartmodul den Zustand eines zweiten Startanforderungssignals steuert, das eine Funktion des angeforderten Motordrehmoments in Bezug auf einen Drehmomentschwellwert ist, wobei der Drehmomentschwellwert einer Niederdrückposition des Gaspedals entspricht und ferner zumindest von dem Ladezustand einer Antriebsbatterie des Fahrzeugs abhängig ist, und wobei der erste Niederdrückschwellwert kleiner ist als die Niederdrückposition des Drehmomentschwellwerts.

3. Steuerverfahren nach Anspruch 1 oder 2, wobei die Rückschaltanforderung (P_DS) aus einem Signal einer Steuerpalette (24) des Fahrzeuglenkrades (23) erzeugt wird.

4. Steuerverfahren nach einem der Ansprüche 1 bis 3, wobei der erste Schwellenwert (S1) 3% und der zweite Schwellenwert (S2) 0,1 m/s² beträgt.

5. Steuerverfahren nach einem der Ansprüche 1 bis 4, bei dem das Bestimmen (31, 32) das Berechnen des Mittelwerts des ersten und des zweiten Parameters (P1, P2) während einer periodischen Berechnungsdauer umfasst und das Erfassen der Rückschaltanforderung (P_DS) zu dem Endzeitpunkt jeder Berechnungsperiode ausgeführt wird.

6. Steuerverfahren nach Anspruch 5, wobei die periodische Dauer eine Dauer von 0,5 Sekunden hat.

7. Computerprogramm mit Befehlen, die, wenn das Programm von einer Steuereinheit (19) eines Hybridelektrofahrzeugs (1) ausgeführt wird, dieses veranlassen, das Steuerverfahren nach einem der Ansprüche 1 bis 6 auszuführen.

8. Hybrid-Elektrofahrzeug (1) mit einer Brennkraftmaschine (10), einer elektrischen Antriebsmaschine (16), einem automatisierten Getriebe (11), das vom Fahrer manuell über eine Schaltsteuerschnittstelle (24) steuerbar ist, und einer Steuereinheit (19), die so konfiguriert ist, dass sie den Startzustand der Brennkraftmaschine (10) in Abhängigkeit von dem Zustand der Anfahranforderungssignale steuert, **dadurch gekennzeichnet, dass** die Steuereinheit (19) ein Modul (30) zur Vorhersage eines Beschleunigungsmanövers aufweist, das zur Durchführung des Verfahrens konfiguriert ist Steuerung nach einem der Ansprüche 1 bis 6 zur Steuerung eines Startanforderungssignals (RQ_DEM).

9. Hybrid-Elektrofahrzeug (1) nach Anspruch 8, wobei die Schaltsteuerschnittstelle (24) eine Lenkradsteuerpalette (23) des Fahrzeugs ist.

## Claims

1. A method for ordering a hybrid electrified vehicle (1) comprising an electric drive machine (16) and an internal combustion engine (10), wherein the starting status of the internal combustion engine (10) is dependent on the status of start request signals, wherein a prediction unit (30) for an acceleration manoeuvre controls the status of a first start request signal (RQ_dem) by implementing the following successive steps:
- determining (31, 32) a first parameter (P 1) representative of the depression of an accelerator pedal and a second parameter (P 2) representative of the acceleration of the vehicle,
- comparing (33) the first depression parameter (P 1) by report with a first depression threshold (S 1) comprised between 3% and 10% of the depression travel of the pedal and comparing (34) the second acceleration parameter (P 2) by report with a second threshold (S 2) comprised between 0.1 m/s² and 0.3 m/s²,
- in the case of detection of a manual downshift request (P_DS), then the first start request signal (RQ_dem) of the prediction unit (30) is activated only if, simultaneously at the instant of detection, the first parameter (P 1) and the second parameter (P 2) are greater than the first threshold (S 1) and the second threshold (S 2) respectively.

2. The order method as claimed in claim 1, wherein a main starter unit controls the status of a second starter request signal that is a function of the ordered drive torque by report to a torque threshold, wherein the torque threshold corresponds to a position of depression of the accelerator pedal and is further dependent at least on the load status of a traction battery of the vehicle, and wherein the first depression threshold is less than said position of depression of the torque threshold.

3. The order method according to claim 1 or 2, wherein the downshift request is generated from a signal of a order pallet (24) of the steering wheel (23) of the vehicle.

4. The order method according to any one of claims 1 to 3, wherein the first threshold (S1) is equal to 3% and the second threshold (S2) is equal to 0.1 m/s².

5. The order method according to any one of claims 1 to 4, wherein the determination (31, 32) consists in calculating the average value of the first and second parameters (P 1, P 2) during a compute period {circumflex over (Y)} and in that the detection of the downshift request (P_DS) is executed at the instant of completion of each compute period.

6. The order method as claimed in claim 5, wherein the period a has a period of 0.5 seconds.

7. computer plan comprising instructions which, when the plan is executed by a order unit (19) of a hybrid electrified vehicle (1), lead the latter to implement the order method according to any one of claims 1 to 6.

8. Hybrid electrified vehicle (1) comprising an internal combustion engine (10), an electric drive machine (16), an automated gear box (11) capable of being ordered by the driver manually by a report change order interface (24) and a order unit (19) configured to order the starting status of the internal combustion engine (10) as a function of the status of start request signals, wherein the unit purchase order (19) comprises a module (30) for predicting an acceleration manoeuvre configured to implement the order method according to any one of claims 1 to 6 for controlling a start request signal (RQ dem).

9. Hybrid electrified vehicle (1) according to claim 8, in which the report change order interface (24) is a order pallet of the steering wheel (23) of the vehicle.
